# FASCICULE DE BREVET EUROPEEN

(11) **EP 2 794 311 B1**
(45) Date de publication et mention de la délivrance du brevet: **25.04.2018**
(21) Numéro de dépôt: 12805677.7
(22) Date de dépôt: 17.12.2012
(51) Int. Cl.: B60H 1/00

(54) **CAISSON D'UNITÉ DE VENTILATION, CHAUFFAGE ET/OU CLIMATISATION POUR HABITACLE DE VÉHICULE AUTOMOBILE**
HEIZUNGS-, LÜFTUNGS-UND/ODER KLIMAANLAGENGEHÄUSE FÜR DEN PASSAGIERRAUM EINES KRAFTFAHRZEUGS
HEATING, VENTILATION AND/OR AIR-CONDITIONING UNIT CASING FOR MOTOR VEHICLE PASSENGER COMPARTMENT

(30) Priorité: 23.12.2011 FR 1104051
(43) Date de publication de la demande: 29.10.2014
(73) Titulaire: Valeo Systemes Thermiques, 78320 Le Mesnil Saint Denis (FR)
(72) Inventeur: PIERRES, Philippe, F-78990 Elancourt (FR); LISKA, Jan, CP26944 Rakovnik (CZ)
(74) Mandataire: Metz, Gaëlle
(86) Numéro de dépôt international: PCT/EP2012/075721
(87) Numéro de publication internationale: WO 2013/092465

(56) Documents cités:
- EP-A2- 1 142 734
- EP-A2- 1 241 032
- DE-A1- 10 350 193

## Description

La présente invention concerne le domaine de la ventilation et/ou du conditionnement de l'air de l'habitacle d'un véhicule. L'invention concerne plus particulièrement un caisson d'unité de ventilation, chauffage et/ou climatisation mis en oeuvre pour canaliser l'air pendant son conditionnement, avant son injection dans l'habitacle et éventuellement lors de son recyclage. Un tel caisson est divulgué par EP 1 241 032 A1. Dans ce domaine, il est connu de mettre en oeuvre un système comprenant une turbine qui aspire de l'air pour l'insuffler dans une unité de ventilation, chauffage et/ou climatisation à partir de laquelle l'air conditionné est dirigé vers l'intérieur de l'habitacle. L'unité de ventilation, chauffage et/ou climatisation comprend généralement un caisson délimitant au moins une chambre d'aspiration dont la paroi périphérique forme une volute et qui est destinée à recevoir une turbine d'un groupe moto-ventilateur. Le caisson délimite aussi une chambre de répartition raccordée à une sortie de la chambre d'aspiration ainsi que des canaux de distribution raccordés à une sortie de la chambre de répartition.

Le caisson est le plus souvent formé par deux boitiers en matière plastique dont les différentes zones sont parfaitement séparées et ne sont pas imbriquées les unes dans les autres de manière de sorte que le démoulage de ces boîtiers soit possible. Cependant, un tel mode de réalisation permettant effectivement de réaliser un caisson à faible coût, présente l'inconvénient d'être relativement volumineux.

Or, la conception des nouveaux véhicules automobiles impose de réduire l'espace habituellement disponible pour l'unité de ventilation de sorte qu'il est apparu le besoin d'un nouveau type de caisson dont la conception permette d'en réduire le volume tout en conservant l'ensemble des fonctions des caissons selon l'art antérieur et en présentant des dimensions n'induisant pas trop de perte de charge.

Afin d'atteindre cet objectif, l'invention concerne un caisson d'unité de ventilation, chauffage et/ou climatisation pour habitacle de véhicule automobile délimitant au moins :
- une chambre d'aspiration dont la paroi périphérique forme une volute et qui est destinée à recevoir une turbine d'un groupe moto-ventilateur,
- une chambre de répartition raccordée à une sortie de la chambre d'aspiration,
- des canaux de distribution raccordés à une sortie de la chambre de répartition,

Selon la présente invention, le caisson comprend un élément de cloison interne dont une face forme une partie au moins de la volute et dont la face opposée à la volute forme une paroi d'au moins un canal de distribution. La mise en oeuvre d'un élément de cloison qui délimite à la fois la volute et un canal de distribution permet d'éviter les pertes d'espace et donc d'obtenir un caisson aussi compact que possible à performances aérauliques équivalentes.

Selon la présente invention le caisson comprend deux boitiers qui forment ensembles une enveloppe extérieure du caisson et qui délimitent avec l'élément de cloison interne, rapporté dans les deux boitiers, une partie au moins de la volute de la chambre d'aspiration et une partie au moins des canaux de distribution.

Un tel mode de réalisation du caisson permet d'obtenir des boîtiers avec des formes facilement démoulables et de simplifier la fabrication des moules et ce, grâce à l'ajout d'un élément de cloison rapporté qui permet d'obtenir une conformation qui n'aurait pu être obtenue directement par le moulage classique des boîtiers.

Selon une caractéristique de l'invention, l'élément de cloison interne porte, sur sa face opposée à la volute, au moins un voile de séparation de deux canaux de distribution. Selon une variante de cette caractéristique, l'élément de cloison interne comprend au moins trois voiles de séparation d'au moins deux canaux de distribution.

Selon une autre variante de cette caractéristique, chaque voile de séparation s'étend sensiblement perpendiculairement à face du de l'élément de cloison qui le porte.

Selon une caractéristique de l'invention, le caisson comprend au moins une chambre ou un canal de mélange.

Selon un autre caractéristique de la présente invention, l'élément de cloison interne comprend au moins deux voiles de séparation de canaux d'alimentation de la chambre de mélange.

Selon une autre caractéristique de l'invention le caisson comprend au moins une chambre ou un canal de mélange et au moins un deuxième élément de cloison interne rapporté qui comprend au moins deux voiles de séparation de canaux d'alimentation de la chambre de mélange.

Selon encore une autre caractéristique de l'invention, l'élément de cloison interne comprend au moins un palier de support d'un volet de commande d'au moins un canal de distribution.

Selon une variante de cette caractéristique, chaque palier de support est aménagé dans un voile de séparation.

L'invention concerne également une unité de ventilation, chauffage et/ou climatisation pour habitacle de véhicule automobile comprenant un caisson selon l'invention et un groupe moto-ventilateur dont une turbine est située dans la chambre d'aspiration du caisson.

Bien entendu, les différentes variantes et formes de réalisation de l'invention peuvent être associées les unes avec les autres selon diverses combinaisons dans la mesure où elles ne sont pas incompatibles ou exclusives les unes des autres.

Par ailleurs, diverses autres caractéristiques de l'invention ressortent de la description annexée effectuée en référence aux dessins qui illustrent une forme non limitative de réalisation d'un caisson d'unité de ventilation conforme à l'invention.
- La figure 1 est une perspective schématique d'un caisson, selon l'invention, d'unité de ventilation, chauffage et/ou climatisation pour habitacle de véhicule automobile.
- La figure 2 est une coupe partielle selon le plan II-II de la figure 1 montrant un détail structurel du caisson.
- La figure 3 est une perspective schématique éclatée du caisson de ventilation illustrée à la figure 1.
- La figure 4 est une perspective partiellement arrachée du caisson illustré à la figure 1.
- Les figures 5 et 6 sont des perspectives de trois-quarts respectivement avant et arrière d'un élément de cloison interne rapporté du caisson illustré aux figures 1 à 4.

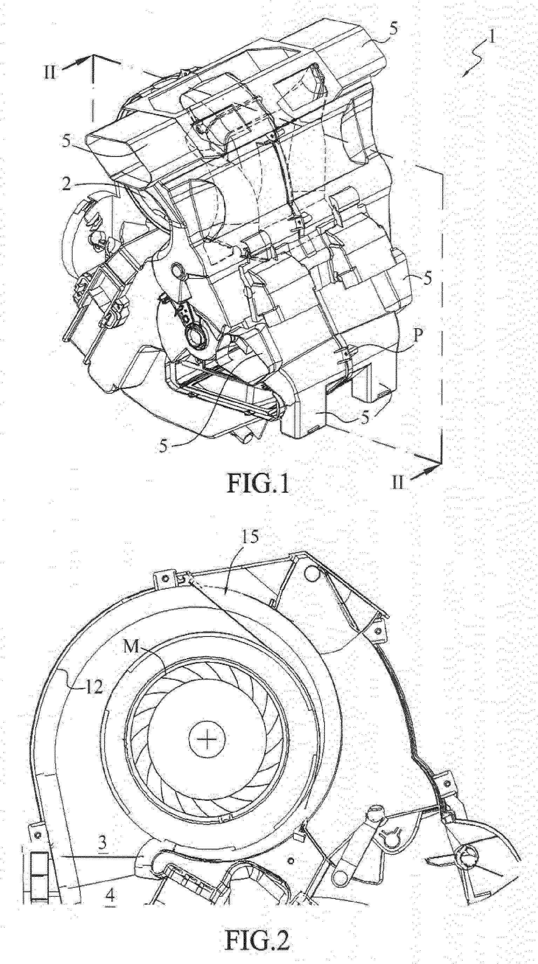

Un caisson d'unité de ventilation, chauffage et/ou climatisation pour habitacle de véhicule selon l'invention, tel que désigné dans son ensemble par la référence 1 à la figure 1, est destiné à venir se placer entre le compartiment moteur et l'habitacle du véhicule généralement sous le tableau de bord ou la plage avant.

Afin d'occuper un espace aussi limité que possible, le caisson 1 possède une conception compacte et regroupe les principales fonctions nécessaires pour assurer la ventilation de l'habitacle. Ainsi le caisson 1 intègre une chambre d'aspiration 2, mieux visible à la figure 2, qui est destinée à recevoir au moins une turbine centrifuge d'un groupe moto ventilateur M. La sortie 3 de la chambre d'aspiration 2 est raccordée à une chambre de répartition 4 dont la sortie est elle-même raccordée à des canaux 5 de distribution de l'air pulsé en provenance de la chambre d'aspiration 2.

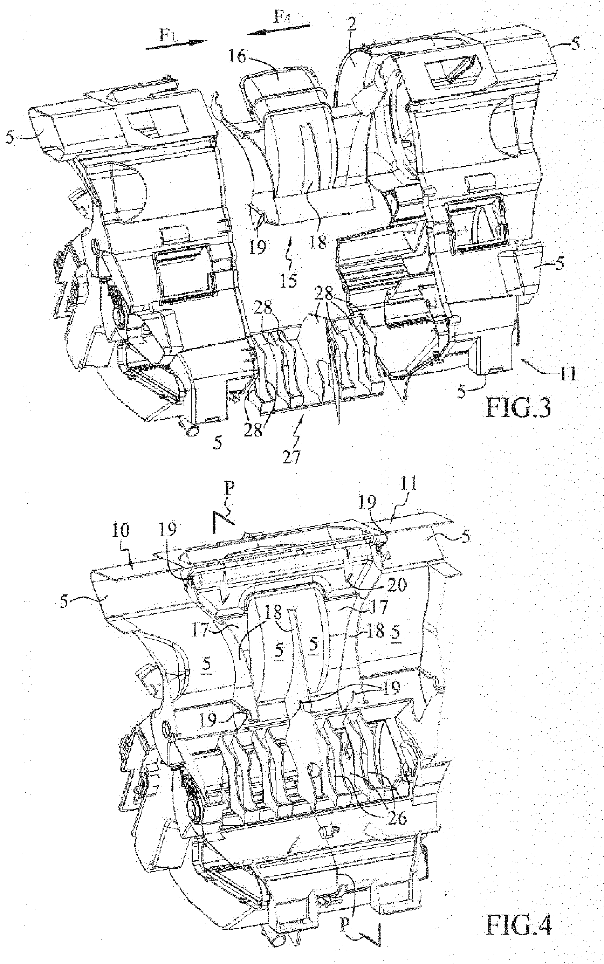

Afin de présenter un coût de fabrication et de montage raisonnable, l'enveloppe extérieure du caisson, telle que visible à la figure 1, est principalement formée par deux boîtiers 10 et 11 assemblés selon un plan de joint P sensiblement perpendiculaire à l'axe de rotation de la turbine à l'intérieur de la chambre d'aspiration 2. L'assemblage des deux boîtiers 10 et 11 s'effectue dans le sens des flèches F1 de la figure 3 parallèlement à l'axe de rotation de la turbine à l'intérieur de la chambre d'aspiration 2. Chacun des boîtiers 10 et 11 est obtenu par injection/moulage de matière plastique dans un moule qui s'ouvre dans le sens inverse de celui des flèches F1. Il est donc difficile, voire impossible, de former à l'intérieur d'un boîtier 10 ou 11 une ou plusieurs parois qui sont perpendiculaires à la direction de l'ouverture du moule en n'étant pas adjacentes à une ouverture latérale réalisée au moyen d'un noyau mobile du moule.

Par ailleurs, pour que l'aspiration réalisée au niveau de la chambre d'aspiration 2, soit aussi efficace que possible, il est nécessaire que la paroi périphérique de la chambre d'aspiration 2 forme une volute 12 dont les parois perpendiculaires à l'axe de rotation de la turbine soient au plus près de cette dernière de manière à limiter les fuites. Or, dans la mesure où la chambre d'aspiration 2 se situe dans une région médiane du caisson 1, il est particulièrement difficile, voire impossible, d'obtenir des parois de volute de forme satisfaisante, brutes de moulage au niveau des boîtiers 10 et 11.

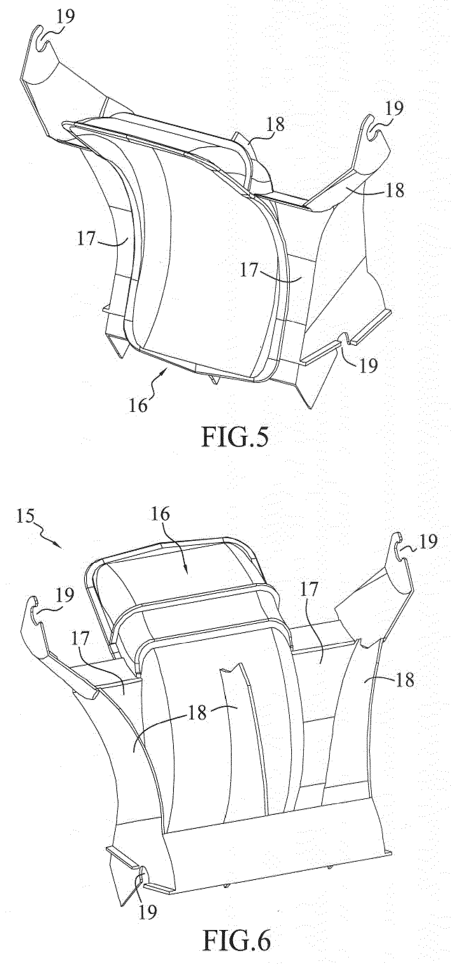

Afin de remédier à cette difficulté, l'invention propose de mettre en oeuvre un élément de cloison interne 15 qui est rapporté à l'intérieur des boîtiers 10 et 11 comme le montre la figure 1 sur laquelle l'élément de cloison interne 15 est visible par transparence et représenté en sombre par opposition au reste de du caisson 1. La position de l'élément de cloison interne 15 à l'intérieur des boîtiers 10 et 11 est également visible à la figure 4. L'élément de cloison interne 15 comprend alors une face concave, visible à la figure 5, qui forme une partie au moins de la volute 12 tandis que la face arrière, visible à la figure 6, est plutôt convexe et forme une paroi d'au moins un canal de distribution 5.

Comme le montrent plus particulièrement les figures 5 et 6, l'élément de cloison interne de 15 présente une partie centrale 16 qui forme une portion de coquille arquée destinée à venir envelopper en partie la turbine située dans la chambre d'aspiration 2 pour former la naissance de la volute 12. Vue de la face avant, comme illustrée à la figure 5, cette partie centrale 16 possède une forme doublement concave en étant arquée dans le plan de joint P et en présentant une forme en U selon une section perpendiculaire au plan de joint P. Dans la mesure où les parois de l'élément de cloison interne 15 sont relativement peu épaisses, la partie centrale 16 présente en vue arrière, comme illustrée à la figure 6, une forme doublement convexe correspondant à la forme doublement concave de la face avant.

La partie centrale 16 de l'élément de cloison interne 15 est bordée par deux ailes latérales 17 qui sont sensiblement perpendiculaires au plan de joint P. Les ailes latérales 17 contribuent à définir des parois de canaux de distribution 5 à l'intérieur du caisson 1.

L'élément de cloison interne 15 porte, en outre, sur sa face opposée à la volute 12, à savoir sa face arrière, au moins un et, selon l'exemple illustré à la figure 4, trois voiles de séparation 18 qui sont sensiblement parallèles au plan de joint P. Les trois voiles 18 contribuent à délimiter, avec les parois des boîtiers 10 et 11, quatre canaux de distribution 5 adjacents comme le montre la figure 4, et servent notamment à la séparation des flux d'air entre les sorties d'air de dégivrage et de ventilation. Il est à noter que les voiles de séparation 18 s'étendent sensiblement perpendiculairement à la face de l'élément de cloison 15 qui les portes.

La mise en oeuvre de l'élément de cloison interne 15 permet donc d'imbriquer en partie la volute 12 dans les canaux de distribution 5 de sorte que la profondeur totale du caisson d'unité de ventilation, chauffage et/ou climatisation 1 peut être réduite. Une telle configuration n'aurait pas pu être réalisée sans l'élément de cloison interne 15 dans la mesure où les conformations qu'il définit, n'auraient pu être obtenues directement par moulage des boîtiers 10 et 11.

Selon l'exemple illustré notamment à la figure 4, l'élément de cloison interne 15 comprend en outre au moins un, et selon l'exemple illustré à la figure 4, cinq paliers 19 de support de volet 20 de commande de canaux de distribution 5. Les volets de commande 20 permettent une ouverture sélective desdits canaux de distribution 5 en fonction du mode de fonctionnement de l'unité de ventilation et/ou de sélections effectuées par un utilisateur. Dans le cas présent les paliers 19 sont chacun aménagés dans un voile de séparation 18.

Selon l'exemple illustré, le caisson 1 comprend également une chambre de mélange 25 à l'intérieur de laquelle un air frais est susceptible d'être mélangé avec un air chaud de manière à obtenir de l'air à une température de consigne. Afin de permettre une homogénéisation de la température rapide malgré un court temps de séjour dans la chambre de mélange 25, l'invention propose de définir à l'intérieur d'une paroi d'une partie de ladite chambre de mélange 25 plusieurs canaux d'alimentation de cette dernière.

À cet effet, il est mis en oeuvre un deuxième élément de cloison interne 27 qui est rapporté à l'intérieur des boîtiers 10 et 11 et qui comprend au moins deux et, selon l'exemple illustré, neuf voiles 28 de séparation des canaux d'alimentation 26. Le deuxième élément de cloison interne 27 peut être indépendant de l'élément de cloison interne de 15 ou au contraire faire partie intégrante de ce dernier de sorte qu'ils forment un seul et même élément de cloison interne.

Bien entendu, diverses autres modifications peuvent être apportées à l'invention dans le cadre des revendications annexées.

## Revendications

1. Caisson d'unité de ventilation, chauffage et/ou climatisation pour habitacle de véhicule automobile délimitant au moins :
- une chambre d'aspiration (2) dont la paroi périphérique forme une volute (12) et qui est destinée à recevoir une turbine d'un groupe moto-ventilateur,
- une chambre de répartition (4) raccordée à une sortie (3) de la chambre d'aspiration (2),
- des canaux de distribution (5) raccordés à une sortie de la chambre de répartition (4), le caisson comprenant un élément de cloison interne (15) dont une face forme une partie au moins de la volute (12) et dont la face opposée à la volute forme une paroi d'au moins un canal de distribution (5), **caractérisé en ce qu'**il comprend deux boitiers (10,11) qui forment ensemble une enveloppe extérieure du caisson et qui délimitent avec l'élément de cloison interne (15), rapporté dans les deux boitiers, une partie au moins de la volute (12) de la chambre d'aspiration (2) et une partie au moins des canaux de distribution (5).

2. Caisson selon la revendication 1, **caractérisé en ce que** l'élément de cloison interne (15) porte, sur sa face opposée à la volute (12), au moins un voile de séparation de deux canaux de distribution.

3. Caisson selon la revendication 2, **caractérisé en ce que** l'élément de cloison interne (15) comprend au moins trois voiles (18) de séparation d'au moins deux canaux de distribution.

4. Caisson selon la revendication 2 ou 3, **caractérisé en ce que** chaque voile de séparation (18) s'étend sensiblement perpendiculairement à la face de l'élément de cloison (15) qui le porte.

5. Caisson selon l'une des revendications 1 à 4, **caractérisé en ce qu'**il comprend au moins une chambre de mélange (25) et **en ce que** l'élément de cloison interne (15) comprend au moins deux voiles (28) de séparation de canaux d'alimentation de la chambre de mélange .

6. Caisson selon l'une des revendications 1 à 4, **caractérisé en ce qu'**il comprend au moins une chambre de mélange (25) et au moins un deuxième élément de cloison interne (27) rapporté qui comprend au moins deux voiles de séparation (28) de canaux d'alimentation (26) de la chambre de mélange (25).

7. Caisson selon l'une des revendications 1 à 6, **caractérisé en ce que** l'élément de cloison interne comprend au moins un palier (19) de support d'un volet de commande d'au moins un canal de distribution.

8. Caisson selon la revendication 7, **caractérisé en ce que** le palier (19) de support est aménagé dans un voile de séparation (18, 28).

9. Unité de ventilation, chauffage et/ou climatisation pour habitacle de véhicule automobile comprenant un caisson (1) selon l'une des revendications précédentes et un groupe moto-ventilateur (M) dont une turbine est située dans la chambre d'aspiration (2) du caisson de ladite unité de ventilation, chauffage et/ou climatisation.

## Patentansprüche

1. Kasten einer Lüftungs-, Heiz- und/oder Klimatisierungseinheit für den Innenraum eines Kraftfahrzeugs, der mindestens begrenzt:
- eine Ansaugkammer (2), deren Umfangswand ein Turbinengehäuse (12) bildet und die dazu bestimmt ist, eine Turbine einer Gebläseeinheit aufzunehmen,
- eine Verteilungskammer (4), die an einen Ausgang (3) der Ansaugkammer (2) angeschlossen ist,
- Ausgabekanäle (5), die an einen Ausgang der Verteilungskammer (4) angeschlossen sind,
wobei der Kasten ein inneres Trennwandelement (15) enthält, von dem eine Seite zumindest einen Teil des Turbinengehäuses (12) bildet und von dem die dem Turbinengehäuse entgegengesetzte Seite eine Wand mindestens eines Ausgabekanals (5) bildet, **dadurch gekennzeichnet, dass** er zwei Gehäuse (10, 11) enthält, die zusammen eine Außenhülle des Kastens bilden und die mit dem inneren Trennwandelement (15), das in die zwei Gehäuse eingesetzt ist, zumindest einen Teil des Turbinengehäuses (12) der Ansaugkammer (2) und zumindest einen Teil der Ausgabekanäle (5) begrenzen.

2. Kasten nach Anspruch 1, **dadurch gekennzeichnet, dass** das innere Trennwandelement (15) auf seiner dem Turbinengehäuse (12) entgegengesetzten Seite mindestens eine Trennabdeckung von zwei Ausgabekanälen trägt.

3. Kasten nach Anspruch 2, **dadurch gekennzeichnet, dass** das innere Trennwandelement (15) mindestens drei Trennabdeckungen (18) von mindestens zwei Ausgabekanälen enthält.

4. Kasten nach Anspruch 2 oder 3, **dadurch gekennzeichnet, dass** jede Trennabdeckung (18) sich im Wesentlichen lotrecht zu der Seite des Trennwandelements (15) erstreckt, das sie trägt.

5. Kasten nach einem der Ansprüche 1 bis 4, **dadurch gekennzeichnet, dass** er mindestens eine Mischkammer (25) enthält, und dass das innere Trennwandelement (15) mindestens zwei Trennabdeckungen (28) von Versorgungskanälen der Mischkammer enthält.

6. Kasten nach einem der Ansprüche 1 bis 4, **dadurch gekennzeichnet, dass** es mindestens eine Mischkammer (25) und mindestens ein zweites eingesetztes inneres Trennwandelement (27) enthält, das mindestens zwei Trennabdeckungen (28) von Versorgungskanälen (26) der Mischkammer (25) enthält.

7. Kasten nach einem der Ansprüche 1 bis 6, **dadurch gekennzeichnet, dass** das innere Trennwandelement mindestens ein Stützlager (19) einer Steuerklappe mindestens eines Ausgabekanals enthält.

8. Kasten nach Anspruch 7, **dadurch gekennzeichnet, dass** das Stützlager (19) in einer Trennabdeckung (18, 28) angeordnet ist.

9. Lüftungs-, Heiz- und/oder Klimatisierungseinheit für den Innenraum eines Kraftfahrzeugs, die einen Kasten (1) nach einem der vorhergehenden Ansprüche und eine Gebläseeinheit (M) enthält, von der eine Turbine sich in der Ansaugkammer (2) des Kastens der Lüftungs-, Heiz- und/oder Klimatisierungseinheit befindet.

## Claims

1. Heating, ventilation and/or air-conditioning unit casing for a motor vehicle passenger compartment delimiting at least:
- a suction chamber (2) of which the peripheral wall forms a blower housing (12) and which is intended to receive a turbine of a motorized fan unit,
- a distribution chamber (4) connected to an outlet (3) of the suction chamber (2),
- distribution ducts (5) connected to an outlet of the distribution chamber (4),
the casing comprising an internal partition element (15) of which one face forms at least part of the blower housing (12) and of which the opposite face to the blower housing forms a wall of at least one distribution duct (5), **characterized in that** it comprises two covers (10, 11) which together form an outer envelope of the casing and which delimit with the internal partition element (15), which is fitted as an add-on in the two covers, at least part of the blower housing (12) of the suction chamber (2) and at least part of the distribution ducts (5).

2. Casing according to Claim 1, **characterized in that** the internal partition element (15) bears, on its opposite face to the blower housing (12), at least one web for separating two distribution ducts.

3. Casing according to Claim 2, **characterized in that** the internal partition element (15) comprises at least three webs (18) for separating at least two distribution ducts.

4. Casing according to Claim 2 or 3, **characterized in that** each separating web (18) extends substantially perpendicularly to the face of the partition element (15) which bears it.

5. Casing according to one of Claims 1 to 4, **characterized in that** it comprises at least one mixing chamber (25), and **in that** the internal partition element (15) comprises at least two webs (28) for separating supply ducts of the mixing chamber.

6. Casing according to one of Claims 1 to 4, **characterized in that** it comprises at least one mixing chamber (25) and at least one second add-on internal partition element (27) which comprises at least two webs (28) for separating supply ducts (26) of the mixing chamber (25).

7. Casing according to one of Claims 1 to 6, **characterized in that** the internal partition element comprises at least one bearing (19) for supporting a control flap of at least one distribution duct.

8. Casing according to Claim 7, **characterized in that** the support bearing (19) is formed in a separating web (18, 28).

9. Heating, ventilation and/or air-conditioning unit for a motor vehicle passenger compartment comprising a casing (1) according to one of the preceding claims and a motorized fan unit (M) of which a turbine is situated in the suction chamber (2) of the casing of the said heating, ventilation and/or air-conditioning unit.
